# EUROPÄISCHE PATENTSCHRIFT

(11) **EP 0 685 395 B1**
(45) Veröffentlichungstag und Bekanntmachung des Hinweises auf die Patenterteilung: **22.07.1998**
(21) Anmeldenummer: 95107708.0
(22) Anmeldetag: 20.05.1995
(51) Int. Cl.: B65B 43/12, B65G 47/51

(54) **Verfahren und Vorrichtung zum Beschicken einer Packmaschine mit Packmaterialzuschnitten**
Method and device for feeding a packaging machine with paper blanks
Procédé et dispositif pour alimenter une machine d'emballage avec des flans de papier

(30) Priorität: 03.06.1994 DE 4419416
(43) Veröffentlichungstag der Anmeldung: 06.12.1995
(73) Patentinhaber: Hauni Maschinenbau Aktiengesellschaft, 21033 Hamburg (DE)
(72) Erfinder: Blidung, Otto, D-21502 Geesthacht (DE); Wohlgemuth, Lothar, D-21502 Geesthacht (DE); Deichmöller, Jens, D-21465 Reinbek (DE)

(56) Entgegenhaltungen:
- FR-E- 87 688
- US-A- 5 267 821

## Beschreibung

Die Erfindung betrifft ein Verfahren zum Beschicken einer Packmaschine, insbesondere einer Maschine zum Verpacken von Zigaretten oder dergleichen Produkten in Klappschachteln (Hinged-Lid-Packungen), mit Stapeln aus Packmaterialzuschnitten gemäß dem Oberbegriff des Anspruchs 1 sowie eine entsprechende Vorrichtung gemäß dem Oberbegriff des Anspruchs 6.

Moderne leistungsfähige Packmaschinen mit hohem Packungsausstoß erfordern eine möglichst störungsfreie und ununterbrochene Zurührung des für die Herstellung der Packungen erforderlichen Verpackungsmaterials. Besteht das Verpackungsmaterial aus vorgefertigten Zuschnitten, wie das bei Maschinen zum Verpacken von Zigaretten oder ähnlichen Produkten in Klappschachteln (Hinged-Lid-Packungen) üblich ist, so weist die Packmaschine zwar ein Zuschnittmagazin auf, dessen Speichervolumen aber begrenzt ist. Für die Aufrechterhaltung des Betriebes der Maschine ist daher eine dauernde Nachfüllung des Magazins erforderlich. Durch Zuführung von Zuschnittstapeln aus einem größeren Vorrat wird für die rechtzeitige Ergänzung des Inhalts des Zuschnittsmagazins gesorgt.

Durch die US-PS 5 183 380 (≙ DE 40 01 051 A1) ist eine Einrichtung zum Fördern von Verpackungsmaterialzuschnitten in Stapeln von einer Transportpalette in das Zuschnittmagazin einer Zigaretten-Packmaschine bekannt. Diese weist einen endlosen, horizontal umlaufenden Förderer mit Taschen zum Aufnehmen von Zuschnittstapeln auf. Von einem Zuführförderer werden die Stapel nacheinander in aufeinanderfolgende Taschen des Taschenförderers übergeben, der sie in einer Entnahmestation an das Zuschnittmagazin einer Packmaschine abgibt. Der Taschenförderer transportiert die Zuschnittstapel in einer Reihe vom Zuführförderer zum Magazin, so daß sich Unterbrechungen der Zulieferung der Stapel zum Taschenförderer auch unmittelbar oder verzögert auf die Übergabefolge der Stapel in das Magazin auswirken.

Der Erfindung liegt die Aufgabe zugrunde, das eingangs angegebene Verfahren und die Vorrichtung weiter zu verbessern, insbesondere eine weitgehend unterbrechungsfreie Versorgung einer Packmaschine mit Packmaterialzuschnitten zu gewährleisten.

Gelöst wird diese Aufgabe bei einem Verfahren der eingangs angegebenen Art erfindungsgemäß durch die Maßnahmen, die im kennzeichnenden Teil des Anspruchs 1 angegeben sind. Hiernach werden also in eine doppelbahnige Transferstrecke, die den Zuführförderer und einen Abgabeförderer miteinander verbindet, zeitweilig mehr Zuschnittstapel übergeben, als aktuell zum Packmaschinenmagazin hin abgenommen werden. Über eine als Übergabeförderstrecke geschaltete erste Förderstrecke werden die Stapel mit einer Förderrate, die der Abnahmerate des Packmaschinenmagazins entspricht, direkt zum Abgabeförderer transportiert. Die zugeführten überzähligen Stapel dagegen werden in eine zweite Förderstrecke übergeben, die als Durchlaufspeicherstrecke arbeitet und für Unterbrechungen der Zuführung von Stapeln über den Zuführförderer einen Stapelvorrat als Reserve aufbaut.

Fortführungen und zweckmäßige Ausgestaltungen des Verfahrens nach der Erfindung sind in den Unteransprüchen 2 bis 5 enthalten.

Mit den Maßnahmen des Anspruchs 2 wird sichergestellt, daß die gemäß der Erfindung doppelbahnige Transferstrecke einerseits optimal als Speicherstrecke nutzbar ist und andererseits für die lückenlose Versorgung der Packmaschine mit Zuschnitten den unterbrechungsfreien Zugriff auf nachfolgende Stapel ermöglicht. Die Ansprüche 3 bis 5 enthalten Maßnahmen für eine optimale Versorgung des Packmaschinenmagazins über die erfindungsgemäß vorgesehene doppelbahnige Transferstrecke, wobei im einzelnen Vorkehrungen getroffen sind, um die Funktionen der ersten und der zweiten Förderstrecke der doppelbahnigen Transferstrecke als Übergabeförderstrecke und Durchlaufspeicherstrecke in Abhängigkeit von vorgegebenen Betriebszuständen zu vertauschen. Auch dies dient der ununterbrochenen Versorgung des Packmaschinenmagazins mit Zuschnittstapeln, so daß Pausen in der Zuführung der Stapel, beispielsweise bei einem Palettenwechsel in einer vorgeordneten Beschickungsstation, überbrückt werden.

Bei einer Vorrichtung der eingangs angegebenen Art wird die der Erfindung zugrundeliegende Aufgabe mit den im Kennzeichen des Anspruchs 6 angegebenen Merkmalen gelöst. Die gemäß der Erfindung zweibahnige Ausbildung des Transferförderers zwischen dem Zuführförderer und dem Abgabeförderer erlaubt einerseits eine lückenlose Übergabe von Stapeln in das Packmaschinenmagazin und andererseits ein Zwischenspeichern von überzähligen Stapeln, wobei der Zugriff auf die gespeicherten Stapel jederzeit möglich bleibt.

Weitere Fortführungen und vorteilhafte sowie zweckmäßige Ausgestaltungen der Vorrichtung nach der Erfindung sind in den Unteransprüchen 7 bis 15 enthalten. Die Ansprüche 7 bis 9 betreffen die Ausbildung und Anordnung der Fördermittel des zweibahnigen Transferförderers. Die Ansprüche 10 und 11 betreffen Merkmale der Übergabemittel in den Übergabestationen, mit denen die Stapel vom Zuführförderer auf die Fördermittel des Transferförderers und von diesen auf den Abgabeförderer übergeben werden. Die Ausbildung der Übergabemittel als Querförderer mit Zangen, welche die Stapel für den Übergabetransport erfassen, gewährleistet eine schnelle Übergabe der Stapel zwischen den Bändern auf kurzen Wegen und stellt sicher, daß die Stapel dabei in ihrer Konfiguration erhalten bleiben und nicht beschädigt werden. Die Ansprüche 12 bis 15 enthalten Merkmale der Steueranordnung, mit der die Übergabemittel und die Fördermittel im Sinne der Erfindung betreibbar sind.

Die Erfindung bietet den Vorteil, daß das Zuschnittmagazin einer Packmaschine unterbrechungsfrei mit Zuschnitten versorgt werden kann, so daß der Betrieb der Packmaschine völlig unabhängig von kurzzeitigen Unterbrechungen der Zuschnittstapelzuführung aus einem vorgeschalteten Vorrat wird. Werden die Zuschnittstapel, wie das in modernen Fertigungsanlagen heute üblich ist, auf Paletten zugeliefert so gewährleistet die Erfindung in sehr vorteilhafter Weise die Überbrückung der durch einen Palettenwechsel verursachten Zuführpausen, so daß sich die Palettenwechsel nicht auf den Betrieb der Packmaschine auswirken. Die gemäß der Erfindung vorgesehene Möglichkeit der Umschaltung der Förderstrecken erlaubt es, die zweibahnige Transferstrecke optimal als Durchlaufspeicher zu nutzen, so daß bei relativ geringem Bauraum eine relativ hohe Speicherkapazität erreichbar ist.

Die Erfindung wird nun anhand der Zeichnung näher erläutert.

Es zeigen:
- Figur 1: eine schematische Draufsicht auf eine Vorrichtung nach der Erfindung mit einer schematischen Darstellung der Steueranordnung,
- Figur 2: eine Seitenansicht der Vorrichtung nach der Erfindung in schematischer Darstellung,
- Figur 3: eine Vorderansicht in Richtung des Pfeils C in Figur 2 und
- Figuren 4 bis 11: verschiedene Betriebszustände der Vorrichtung nach der Erfindung in schematischer Draufsicht.

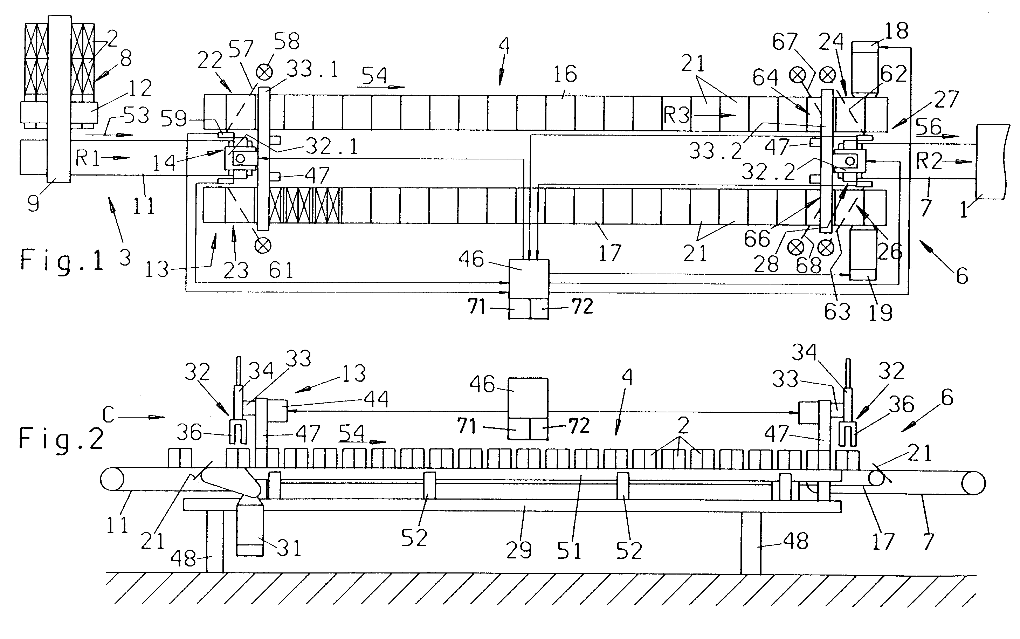

In Figur 1 ist ein Ausführungsbeispiel der Vorrichtung nach der Erfindung in einer schematischen Draufsicht dargestellt. Diese Vorrichtung dient zur Beschickung einer Packmaschine 1 mit Stapeln 2 aus Packmaterialzuschnitten. Sie besteht aus einer Zuführstation 3, einer Transferstrecke 4 und einer Abgabestation 6 mit einem Abgabeförderer 7.

Die Zuschnittstapel 2 werden in Großgebinden 8 auf Paletten angefördert und auf einem Palettenplatz im Bereich der Zuführstation 3 abgestellt. Eine Entnahmeeinrichtung, beispielsweise ein Portalroboter 9 mit einem zwischen dem Palettenplatz und einem Zuführförderer 11 hin und her bewegbaren Transporteur 12, überführt Gruppen von Stapeln aus dem Gebinde 8 auf den Zuführförderer 11, der die Stapel einzeln oder in Paaren nacheinander in eine Übergabeposition 14 einer Übergabestation 13 bringt. Der Zuführförderer 11 kann, wie aus Figur 2 ersichtlich, ein umlaufender Band- oder Kettenförderer sein, dessen Übergabeposition 14 in der Übergabestation 13 liegt. Er kann aber auch als Schieber auf einer stationären Gleitfläche, als Kammerförderer mit die Stapel aufnehmenden Kammern, als Vertikal- oder Schrägaufzug mit Stapelfächern oder -ablagen oder in anderer geeigneter Weise ausgebildet sein. Angetrieben wird der in der Zeichnung als Ausführungsbeispiel dargestellte Zuführförderer 11 mit einem Motor 31 (Figur 2).

Die Transferstrecke weist zwei mit Abstand parallel verlaufende Fördermittel 16 und 17 auf. Als Fördermittel 16 und 17 sind von getrennten Motoren 18 und 19 separat angetriebene Band- oder Kettenförderer vorgesehen, die Tragplatten 21 zum Aufnehmen der Zuschnittstapel aufweisen. Diese Tragplatten 21 bilden entlang dem Fördertrum eine im wesentlichen eng geschlossene Förderfläche. Der Abstand der parallelen Fördermittel 16 und 17 voneinander ist so weit, daß zwischen ihnen im Bereich ihrer stromaufwärtigen Enden das Übergabeende des Zuführförderers 11 und im Bereich ihrer stronabwärtigen Enden das Aufnahmeende des Abgabebeförderers Platz hat. Auf diese Weise liegt die Übergabeposition 14 des Zuführförderers 11 zwischen den Aufgabepositionen 22 und 23 der Fördermittel 16 und 17. Die stromabwärtigen Abgabepositionen 24 und 26 der Fördermittel 16 und 17 liegen in einer zweiten Übergabestation 27 beidseits einer Aufgabeposition 28 des Abgabeförderers 7.

Die Figur 2 zeigt die beschriebene Fördereranordnung in der Seitenansicht. Zu erkennen sind der Zuführförderer 11, der Abgabeförderer 7 sowie das die beiden Förderer verbindende Fördermittel 17 der Transferstrecke 4. Das Fördermittel 17 und das in Figur 2 nicht sichtbare Fördermittel 16 der Transferstrecke 4 sind auf einem Gestell 29 angeordnet, auf dem sie horizontal verlaufen. Im vorderen und hinteren Umlenkbereich des Fördermittels 17 sind Tragplatten 21 zu erkennen, mit denen die Fördermittel im wesentlichen lückenlos bestückt sind. Auf den Tragplatten werden die zu transportierenden Stapel oder Stapelpaare 2 abgesetzt.

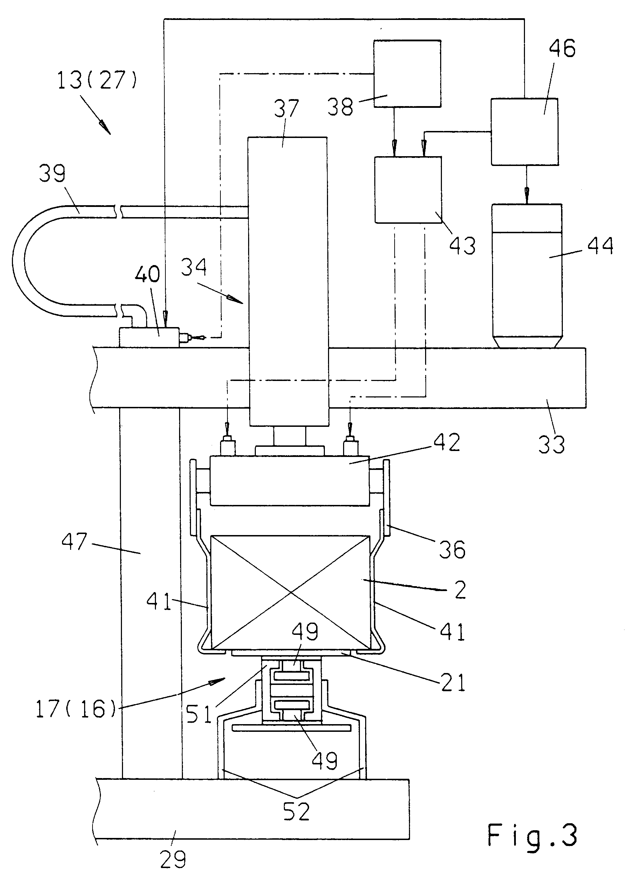

Zum Übergeben von Stapeln oder Stapelpaaren 2, die in der Übergabeposition 14 des Zuführförderers 11 eintreffen, jeweils auf eines der beiden Fördermittel 16 oder 17 ist die erste Übergabestation 13 vorgesehen, deren Einzelheiten den Figuren 1 bis 3 zu entnehmen sind. Wie insbesondere die Figuren 1 und 3 zeigen, weist die Übergabestation 13 als Übergabemittel einen Querförderer 32 auf, der an einem die beiden Fördermittel 16 und 17 sowie den Zuführförderer 11 überbrückenden Querträger 33 zwischen der Übergabeposition 14 und den Aufgabepositionen 22 und 23 hin und her verfahrbar ist. Figur 3 zeigt den Querförderer in seiner rechten Position über der Aufgabeposition 23 des Fördermittels 17 des Transferförderers 4 in einer vergrößerten Darstellung. Die links benachbarten Positionen 14 und 22 wurden zugunsten der größeren und detaillierteren Darstellung der Figur 3 weggelassen. Der Querförderer ist als Zangenwagen 34 mit einer die zu überführenden Stapel oder Stapelpaare ergreifenden Zange 36 ausgebildet. Um die Stapel von oben umfassen zu können, ist die Zange mittels eines Antriebes, beispielsweise einer pneumatischen oder hydraulischen Kolben-Zylindereinheit 37, in der Höhe verfahrbar. Das dafür benötigte Druckmedium wird aus einer Druckquelle 38 über eine Schleppleitung 39 zugeführt. Die Verbindung von der Druckquelle 38 zum Anschluß der Schleppleitung 39 ist, wie auch die anderen Druckleitungen, in der Figur 3 strichpunktiert dargestellt. Das Öffnen und Schließen der Backen 41 der Zange 36 geschieht mittels eines Kolben-Zylindersystems 42, das ebenfalls über strichpunktiert dargestellte Druckleitungen an die Druckquelle angeschlossen ist. Ein zwischengeschaltetes Ventil 43 steuert die Betätigung der Backen der Zange. Ein Motor 44, der auf dem Querträger 33 montiert ist, treibt die Querbewegung des Zangenwagens an. Hierfür kann ein in der Zeichnung nicht dargestellter, an sich bekannter Spindel-, Ketten- oder Riementrieb vorgesehen sein. Der Motor 44 ist mit einer Steueranordnung 46 verbunden, welche ihn in Abhängigkeit von vorgegebenen Betriebszuständen in Gang setzt. Die Steueranordnung 46 steuert auch das Ventil 43 für die Betätigung der Backen 41 der Zange und die Betätigung der Hub-Einheit 37.

Der Querträger 33 ist an vertikalen Säulen 47 angebracht.

Die Säulen 47 stehen zwischen den Fördermitteln 16 und 17 auf einer Tragplatte des Gestells 29, die ihrerseits auf Füßen 48 angeordnet ist (Figur 2). Die Gestellfüße können so hoch sein, daß unter der Tragplatte des Gestells 29 ein mannshoher Durchgang entsteht.

In der Darstellung der Figur 3 befindet sich der Zangenwagen 34 in der Aufgabeposition des Fördermittels 17, in welcher er einen Packmaterialstapel 2 auf eine Tragplatte 21 des Kettenförderers 17 ablegt. Hier ist zu erkennen, daß die Glieder 49 des Kettenförderers in einer Profilschiene 51 geführt sind, die mittels das rücklaufende Trum der Kette umgreifenden Stützen 52 auf der Tragplatte 29 des Gestells angebracht sind. Wird die Kette bewegt, so gleiten ihre Glieder in der Profilschiene 51, in der sie sicher geführt und ausgerichtet sind. Figur 3 zeigt nur den Kettenförderer 17 und seine Aufgabeposition 23. Der parallele Kettenförderer 16 ist identisch aufgebaut und die Aufgabeposition 22 dieses Förderers stimmt mit der Position 23 des Förderers 17 überein. Eine separate Darstellung und Beschreibung dieser Vorrichtungseinzeilheiten ist daher nicht erforderlich.

Die zweite Übergabestation 27 ist ebenso aufgebaut wie die erste, so daß hierzu auf die Figur 3 und deren Beschreibung verwiesen werden kann. Da die zweite Übergabestation 27 aus der dem Blick C entgegengesetzten Richtung betrachtet wird, zeigt die Figur 3 die Abgabeposition 24 des Kettenförderers 16. Um dem Rechnung zu tragen, sind in Figur 3 die Bezugszeichen, die speziell für die zweite Übergabestation 27 gelten, in Klammern hinzugefügt. Gleiche Teile sind in beiden Übergabestationen im übrigen mit denselben Bezugszeichen versehen.

Die Förderrichtung der Förderer ist in den Figuren 1 und 2 mit Richtungspfeilen 53, 54 und 56 angegeben. Es sei aber darauf hingewiesen, daß zumindest die Fördermittel 16 und 17 auch in umgekehrter Richtung betrieben werden können, wenn bestimmte Betriebsbedingungen dies erfordern.

Zur Überwachung des Betriebes der dargestellten Beschickungsvorrichung sind Sensormittel vorgesehen, welche bestimmte Positionen auf den Fördermitteln 16 und 17 daraufhin überwachen, ob sie mit Stapeln belegt sind oder nicht. Als Sensormittel kommen solche in Frage, die das Vorhandensein eines Stapels an einem bestimmten Platz erfassen. Dies können mechanische oder pneumatische Taster, Näherungssensoren oder dergleichen sein. Im gezeigten Ausführungsbeispiel sind als Sensoren Lichtschranken vorgesehen. Eine Lichtschranke 57 mit einer Lichtquelle 58 und einem lichtempfindlichen Aufnehmer 59 überwacht die Belegung der Aufgabeposition 22 des Kettenförderers 16 in der Übergabestation 13. Eine weitere Lichtschranke 61 ist der Aufgabeposition 23 des Kettenförderers zugeordnet. Die Abgabepositionen 24 des Kettenförderers 16 und 26 des Kettenförderers 17 werden mit Lichtschranken 62 bzw. 63 überwacht. Den den Abgabepositionen 24 und 26 benachbarten Positionen 64 und 66 können weitere Lichtschranken 67 bzw. 68 zugeordnet sein. Alle Lichtschranken sind an die Steueranordnung 46 angeschlossen, die ihrerseits ausgangsseitig mit den Antrieben 18 und 19 der Kettenförderer 16 und 17, den Antrieben 44 der Zangenwagen 34, den Hubantrieben 37 der Zangen und den Betätigungsmitteln 42 der Zangenbacken verbunden ist, so daß eine von vorgegebenen Betriebszuständen der Beschickungsvorrichtung abhängige Steuerung der Stapelförderung möglich ist. Hierzu umfaßt die Steueranordnung 46 auch Zähler 71 und 72, welche aus den Signalen der Lichtschranken 57 und 62 die Belegung des Förderers 16 und aus den Signalen der Lichtschranken 61 und 63 die Belegung des Förderers 17 mit Stapeln ermitteln. Erfaßt die Lichtschranke 57 den Zugang eines Stapels zum Förderer 16, so setzt sie den Zählerstand des Zählers 71 um eine Einheit herauf. Umgekehrt setzt die Lichtschranke 62 den Zählerstand um eine Einheit herab, wenn die Lichtschranke 62 die Abgabe eines Stapels erfaßt. Der Zähler 71 enthält also die Angabe der Differenz zwischen den zugeführten und den abgenommenen Stapeln auf dem Förderer 16. Auf diese Weise gibt der Zähler 71 immer wieder die aktuelle Belegung des Förderers 16 an. Entsprechendes gilt für den Zähler 72, der in Zusammenwirkung mit den Lichtschranken 61 und 63 die Belegung des Förderers 17 mit Stapeln repräsentiert. Diese Zählerstände werden in bestimmten Betriebszuständen als Parameter für die Steuerung genutzt.

Im Betrieb werden die Stapel 2 der Übergabeposition 14 in der ersten Übergabestation 13 mittels des Zuführförderers 11 mit einer Zuführrate von R₁ Stapeln pro Zeiteinheit zugeführt. Aus der Aufgabeposition 28 in der zweiten Übergabestation 27 werden die Stapel mittels des Abgabeförderers 7 mit einer Abgaberate von R₂ Stapeln pro Zeiteinheit zur Packmaschine hin abgefördert. Im langfristigen Mittel sind die Zuführrate R₁ und die Abgaberate R₂ gleich, weil langfristig alle zugeführten Stapel in der Packmaschine verarbeitet werden. Während des Betriebes jedoch wechseln Phasen, in denen die Zuführrate R₁ die Abgaberate R₂ überwiegt, mit solchen, in denen umgekehrt die Abgaberate R₂ größer als die Zuführrate R₁ ist, einander ab. Bei einer direkten Kopplung des Zuführförderers 11 mit dem Abgabeförderer 7 würde das bedeuten, daß in Phasen, in denen R₁ kleiner als R₂ ist, die Produktion der Packmaschine 1 an die kleinere Rate R₁ angepaßt, also reduziert werden müßte. Dadurch würde die Produktionsleistung der Maschine direkt von Schwankungen der Zuführrate abhängig. Die vorliegende Erfindung schafft hier mit einem neuen Beschickungsverfahren und einer Vorrichtung Abhilfe.

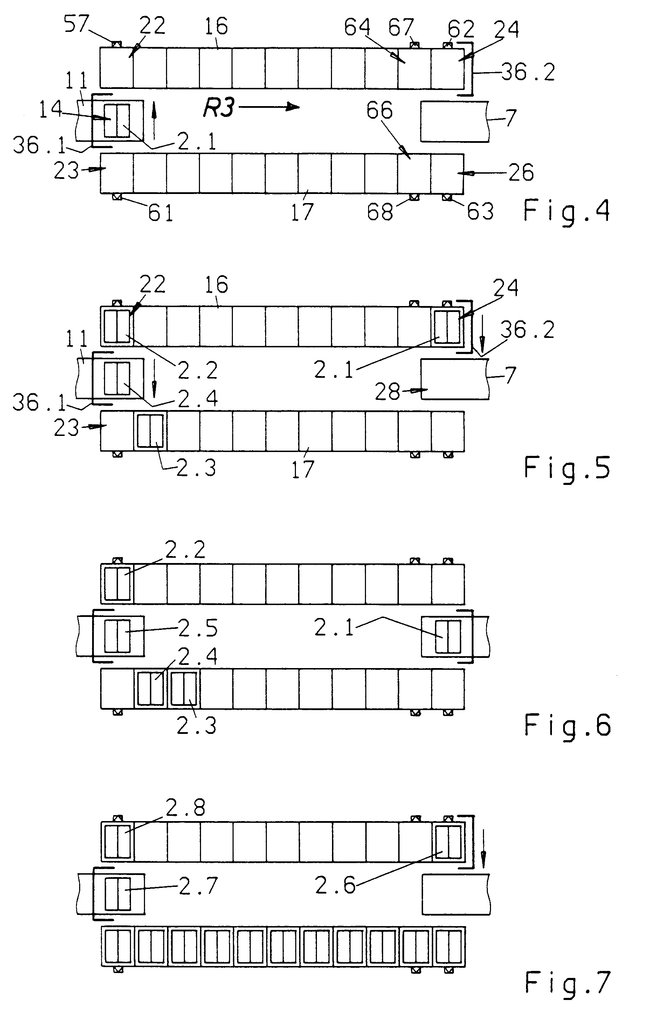

Die Figuren 4 bis 11 zeigen verschiedene Betriebszustände der oben beschriebenen Vorrichtung in einer der Figur 1 entsprechenden Draufsicht. Gleiche Teile sind in diesen Figuren mit denselben Bezugszeichen versehen wie in Figur 1. Die Darstellung ist auf die für das Verständnis nötigsten Bestandteile beschränkt.

Gemäß Figur 4 wird davon ausgegangen, daß beide Förderer 16 und 17 der Transferstrecke 4 leer sind, wie das beispielsweise bei Betriebsbeginn oder nach einer längeren Beschickungspause oder -störung an der Übergabeseite der Transferstrecke der Fall sein kann. Die Zuführrate R₁ wird in dieser Betriebsphase größer angenommen als die Abgaberate R₂.

Ein in der Übergabeposition 14 des Zuführförderers 11 eintreffender Stapel 2.1 wird von der Zange 36.1 des Querförderers 32.1 auf einen der beiden Förderer, im vorliegenden Fall auf den ersten Förderer 16 übergeben, der jetzt als Übergabeförderer arbeitet und den Stapel direkt ohne Halt bis in die Abgabeposition 24 fördert (Figur 4), damit zunächst die angeschlossene Maschine vorrangig mit Packmaterial versorgt wird. Da die Zuführrate R₁ größer ist als die Abgaberate R₂, trifft in der Übergabeposition 14 bereits der nächste Stapel 2.2 ein, bevor die Abgabeposition 24 von der Zange 36.2 des Querförderers 32.2 freigemacht werden kann. Die Lichtschranke 62 meldet die Position 24 noch besetzt. Die Lichtschranke 57 meldet aber, daß die Aufgabeposition 22 des ersten Förderers 16 frei ist, so daß die Zange 36.1 den Stapel 2.2 dennoch auf den ersten Förderer 16 übergeben kann. Der nun folgende Stapel 2.3 kann in diesem Fall nicht mehr auf den ersten Förderer 16, den Übergabeförderer, übergeben werden, da dessen Aufgabeposition 22 vom Stapel 2.2 besetzt ist. Die Zange 36.1 transportiert den Stapel 2.3 daher in die freie Aufgabeposition 23 des zweiten Förderers 17, der im Moment als Durchlaufspeicher arbeitet und den Stapel einen Schritt um etwa eine Stapelbreite weiterfördert (Figur 5). Die Aufgabeposition 23 des Förderers 17 ist nun wieder frei, so daß die Zange 36.1 den nächsten inzwischen eingetroffenen Stapel 2.4 hierhin transferieren kann. Der Förderer 17 wird sodann wieder um einen Schritt weiter nach rechts bewegt, was die Aufgabeposition 23 für den nächsten Stapel freimacht.

Es kann auch der Fall eintreten, daß der erste Förderer 16 mit dem ersten Stapel 2.1 noch in Bewegung ist, wenn der zweite Stapel 2.2 in der Übergabeposition 14 eintrifft. In diesem Fall übergibt der Querförderer 32.1 den ankommenden Stapel 2.2 an den zweiten Förderer 17 und erst den folgenden Stapel 2.3 wieder an den ersten, als Übergabeförderer arbeitenden Förderer 16. Die folgenden Übergabeschritte erfolgen dann weiter wie oben bereits beschrieben. Grundsätzlich gilt, daß der jeweils gerade als Übergabeförderer arbeitende Förderer 16 oder 17 immer Vorrang hat. D.h. daß ein ankommender Stapel 2 in die Aufgabeposition des Übergabeförderers überführt wird, wenn diese frei ist und der Übergabeförderer stillsteht. Damit wird in jedem Fall zunächst die möglichst lückenlose Beschickung der angeschlossenen Maschine sichergestellt.

Inzwischen benötigt die an den Abgabeförderer 7 angeschlossene Packmaschine einen neuen Packmaterialstapel, der nun von der Zange 36.2 der zweiten Übergabestation 27 aus der Abgabeposition 24 des Förderers 16 in die Aufgabeposition 28 des Abgabeförderers 7 bewegt wird und von dort zur Packmaschine gelangt (Figur 6). Jetzt ist die Abgabeposition 24 des ersten Förderers 16 frei und wird vom Förderer 16 mit dem Stapel 2.2 besetzt, der in der Aufgabeposition 22 bereitgehalten wird, so daß in der Abgabeposition 24 des Förderers 16 wieder ein Stapel für die Weiterverarbeitung bereitliegt.

Sobald der Förderer 16 bei Eintreffen des Stapels 2.2 in der Abgabeposition 24 wieder zum Stillstand gekommen ist, meldet die Lichtschranke 57, daß die Aufgabeposition 22 des Förderers 16 frei ist. Der nächste in der Übergabeposition 14 eintreffende Stapel 2.5 kann also wieder auf den Förderer 16 übergeben werden.

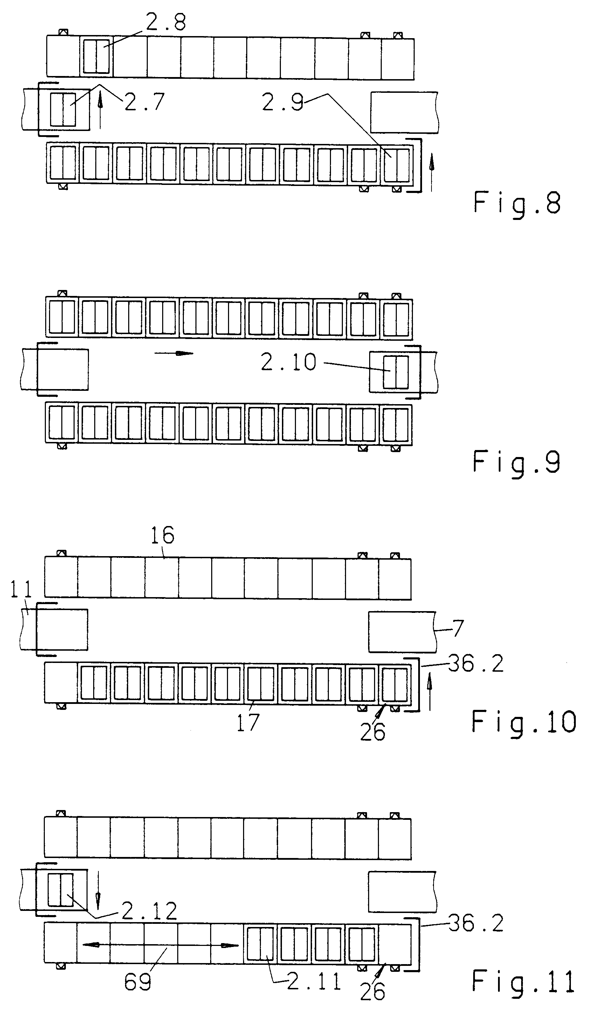

Der als Übergabeförderer arbeitende Förderer 16 transportiert auf diese Weise von den vom Zuführförderer zugeführten Stapeln genau so viele pro Zeiteinheit zur Abgabeposition 24, wie vom Abgabeförderer 7 zur Packmaschine transportiert werden. Die Förderrate R₃ des Übergabeförderers 16 ist also gleich der Abgaberate R₂ des Abförderers 7, und zwar auch dann, wenn die Zuführrate R₁ des Zuführförderers 11 größer ist. Die vom Zuführförderer 11 zugeführten, überzähligen Stapel werden auf den zweiten Förderer 17, den Durchlaufspeicher, übergeben, der sie schrittweise in einer lückenlosen Folge ansammelt, bis alle seine Aufnahmepositionen besetzt sind. Dieser Betriebszustand ist in der Figur 7 gezeigt. Die Lichtschranken 63 und 68 melden ebenso wie die Lichtschranke 61 besetzte Positionen des Förderers 17. Der Durchlaufspeicher ist also voll. Gleichzeitig sind die Abgabeposition 24 und die Aufgabeposition 22 des Förderers 16, der bisher als Übergabeförderer gearbeitet hat, besetzt. Würde die Vorrichtung nun nach demselben Schema weiterbetrieben wie bisher, so müßte die Zuführrate R₁ auf den Wert R₂ der Abgaberate herabgesetzt werden, da eine weitere Speicherung überschüssiger Stapel nicht möglich wäre. Aus diesem Grund ist vorgesehen, daß die beiden Förderer 16 und 17 jetzt ihre Funktionen vertauschen. Der in der Abgabeposition 24 des Förderers 16 bereitgehaltene Stapel 2.6 wird im nächsten Schritt von der Zange 36.2 noch auf den Abgabeförderer 7 überführt, so daß die Abgabeposition 24 frei wird. Anschließend wird der bisher als Übergabeförderer betriebene Förderer 16 als Durchlaufspeicher und der als Durchlaufspeicher arbeitende Förderer 17 als Übergabeförderer betrieben. Der auf dem Zuführförderer 11 eintreffende neue Stapel 2.7 wird, da die Aufgabeposition 23 des aktuellen Übergabeförderers 17 noch besetzt ist, in die Aufgabeposition 22 des Förderers 16 verschoben, die durch Bewegen des zuvor in dieser Position befindlichen Stapels 2.8 um eine Position in Förderrichtung freigeworden ist (Figur 8). Inzwischen übernimmt die Zange 36.2 in der Abgabeposition 26 des Förderers 17 einen Stapel 2.9 und überführt ihn auf den Abgabeförderer 7. Daraufhin transportiert der Förderer 17 die auf ihm enthaltenen Stapel um eine Position nach rechts, so daß die Aufgabeposition 23 frei wird. Der nächste nun auf den Zuführförderer 11 in der Übergabeposition 14 eintreffende Stapel wird von der Zange 36.1 wieder auf den Förderer 17 übergeben. Der Förderer 17 transportiert die Stapel nun als Übergabeförderer mit einer Förderrate R₃ zur Abgabeposition 26, die der Abgaberate R₂ des Abgabeförderers 7 gleich ist. Gleichzeitig übernimmt der Förderer 16 als Durchlaufspeicher die überschüssigen Stapel in lückenloser Folge (Figur 8).

Die Aufnahmekapazität der beiden Förderer 16 und 17 ist unter Berücksichtigung der Abgaberate R2 an die Packmaschine derart bemessen, daß wenigstens ein Wechsel einer Palette mit einem Stapelgebinde 8 (siehe Figur 1) überbrückt wird, ohne den Betrieb der Packmaschine unterbrechen oder verlangsamen zu müssen.

Sind bis zu einem fälligen Palettenwechsel also beide Förderer 16 und 17 komplett oder nahezu komplett mit Stapeln belegt, so wird bei einer Unterbrechung der Stapelzufuhr durch den Zuführförderer 11 der nächste Stapel 2.10 von dem bisher als Übergabeförderer arbeitenden Förderer, beispielsweise dem Förderer 17, abgenommen (Figur 9). Da nun die Abgabeposition 26 des Förderers 17 frei ist, fördert dieser die verbliebenen Stapel um eine Position vor, so daß nun seine Aufgabeposition 23 frei wird. Da gleichzeitig der andere, als Durchlaufspeicher arbeitende Förderer 16 komplett mit Stapeln belegt ist, werden nun die Funktionen der beiden Förderer 16 und 17 wieder vertauscht. Der Förderer 16 wird zum Übergabeförderer, der die auf ihm enthaltenen Stapel mit einer der Abgaberate R₂ des Abgabeförderers 7 übereinstimmenden Förderrate R₃ nacheinander zur Abgabeposition 24 bewegt, von der die Zange 36.2 sie in die Aufgabeposition 28 des Abgabeförderers 7 überführt (Figur 9). So wird das aktuell als Übergabeförderer dienende Fördermittel 16 mit der Abgaberate R₂, die der Förderrate R₃ des Förderers 16 entspricht, geleert.

Sobald der Förderer 16 keine Stapel mehr trägt, werden die Funktionen der Förderer erneut vertauscht. Bei weiterer Unterbrechung der Stapelzufuhr über den Zuführförderer 11 werden die Stapel nun mittels der Zange 36.2 vom zweiten Förderer 17 abgenommen, der sie mit der Förderrate R₃ nacheinander in die Abgabeposition 26 transportiert (Figur 10).

Sobald die Zufuhr von Stapeln über den Zuführförderer 11 wieder beginnt, werden diese von der Zange 36.1 zunächst in die Aufgabeposition 23 des aktuellen Übergabeförderers 17 gebracht, auf dem noch ein Rest von Stapeln vorhanden sein kann (Figur 11). Diese restlichen Stapel werden vom Förderer 17 mit der Förderrate R₃ nacheinander in die Abgabeposition 26 gebracht, aus der sie mit der Zange 36.2 auf den Abgabeförderer 7 überführt werden. Gleichzeitig werden mit derselben Rate Stapel vom Zuführförderer 11 in die Aufgabeposition 23 abgegeben, die bei jedem Schritt des Förderers 17 wieder frei wird. Von dem Zuführförderer 11 herangeförderte überschüssige Stapel werden, wie oben bereits beschrieben, auf dem als Durchlaufspeicher dienenden Förderer 16 abgelegt.

Die zwischen dem letzten, nach der Unterbrechung der Stapelzufuhr auf dem Förderer 17 verbliebenen Stapel 2.11 und dem ersten frisch zugeführten Stapel 2.12 entstandene Lücke 69 wandert beim erneuten Umschalten der Funktionen der beiden Förderer 16 und 17 in Förderrichtung des Förderers 17 aus. Wird nämlich der letzte Stapel 2.11 vor der Lücke 69 von der Zange 36.2 auf den Abgabeförderer 7 übergeben, so wird im folgenden der bereits teilweise wieder mit Stapeln belegte Förderer 16, der bisher als Durchlaufspeicher diente und die überzähligen Stapel übernommen hat, zum Übergabeförderer und der Förderer 17 zum Durchlaufspeicher, der nur noch schrittweise bewegt wird. Mit jedem überzähligen Stapel, der dem Förderer 17 zugeführt wird, wandert die Lücke 69 weiter zur Abgabeposition 26 hin und wird entsprechend kürzer, bis sie völlig geschlossen bzw. verschwunden ist.

Bisher wurde ein im wesentlichen normaler Betriebsablauf geschildert, bei dem sowohl die Entnahme von Stapeln aus der Förderstrecke über den Förderer 7 als auch die Stapelzufuhr über den Förderer 11 mit den vorgesehenen Betriebsgeschwindigkeiten erfolgen. Es können natürlich Abweichungen von diesem Betriebsablauf eintreten.

So ist es beispielsweise möglich, daß beide Förderer 16 und 17 bereits voll belegt sind, ehe alle Stapel von einer Palette abgenommen sind. Das trifft meist dann zu, wenn die angeschlossenen Maschine 1 zeitweise langsamer arbeitet oder ganz ausfällt, während die Stapel weiter mit der Betriebsgeschwindigkeit von der Palette abgenommen und der Förderstrecke 4 zugeführt werden. Steht die Maschine 1 weiter still, während die Förderer 16 und 17 bereits komplett gefüllt sind, muß natürlich auch die Stapelzufuhr über den Förderer 11 unterbrochen werden. Läuft die Maschine 1 wieder und entnimmt der Förderstrecke 4 Stapel mit einer Förderrate R₂, während beide Förderer 16 und 17 komplett belegt sind (siehe Figur 9), so erfolgt die Stapelabnahme an der Abnahmestation 6 abwechselnd von beiden Förderern 16 und 17. Die Förderer 16 und 17 wechseln während dieses Betriebsablaufs bei jeder Stapelabnahme ihre Funktion, so daß sie nacheinander abwechselnd Übergabeförderer und Durchlaufspeicher sind. Während eines solchen Betriebsablaufs, bei dem beide Bänder 16 und 17 gefüllt sind, kann die Stapelzufuhr über den Förderer 11 natürlich auch nur höchstens mit einer Zuführrate R₁ erfolgen, die gleich der Abnahmerate R₂ ist.

Ein weiterer, vom normalen Betriebsablauf abweichender Betriebsablauf ergibt sich, wenn beide Förderer 16 und 17 zwischen aufeinanderfolgenden Stapeln Lücken aufweisen. In diesem Fall wählt die Steuerung das Band mit der größeren Lücke bzw. mit der geringeren Belegung mit Stapeln als Übergabeband aus, während das bereits mehr Stapel enthaltende Band als Vorratsband genutzt wird. Diese Vorgehensweise hat den Vorteil, daß Lücken schnell abgebaut werden. Hierzu sei darauf hingewiesen, daß Lücken in der Belegung der Bänder eine Verringerung der Aufnahmekapazität der Bänder bedeuten und daher die gesamte Aufnahmekapazität der Förderstrecke 4 beschränken können. Aus diesem Grund wird durch die vorgenannte Maßnahme dafür gesorgt, daß Lücken möglichst schnell abgebaut werden.

Durch das gemäß der Erfindung vorgesehene Umschalten der Funktionen der Förderer 16 und 17 ist es möglich, in einer relativ kurzen Förderstrecke relativ großen Speicherraum zur Verfügung zu stellen. Die Umschaltung der Funktionen erlaubt die Benutzung der kompletten Förderstrecke als Speicherraum. Damit lassen sich auch längere Unterbrechungen der Materialzuführung über den Zuführförderer 11 überbrücken, ohne daß das den Betrieb der angeschlossenen Maschine beeinträchtigt.

## Patentansprüche

1. Verfahren zum Beschicken einer Packmaschine, insbesondere einer Maschine zum Verpacken von Zigaretten oder dergleichen Produkten in Klappschachteln (Hinged-Lid-Packungen), mit Stapeln aus Packmaterialzuschnitten, bei dem die Stapel in eine Übergabestation gebracht werden, aus der Übergabestation entlang einer Transferstrecke in eine Abgabestation gefördert werden und aus der Abgabestation zur Packmaschine hin abgegeben werden, dadurch gekennzeichnet, daß die Stapel (2) der Übergabestation (13) mit einer Zuführrate R₁ (Stapel pro Zeiteinheit) zugeführt werden, die wenigstens zeitweise die Abgaberate R₂ (Stapel pro Zeiteinheit) übertrifft, mit der sie aus der Abgabestation (6) zur Packmaschine (1) hin abgegeben werden und daß die Stapel aus der Übergabestation (13) auf eine als Übergabeförderstrecke vorgesehene erste Förderstrecke (16), der entlang sie mit einer mit der Abgaberate übereinstimmenden Förderrate R₃ (Stapel pro Zeiteinheit) zur Abgabestation (6) gefördert werden, und wenigstens eine die Übergabestation mit der Abgabestation verbindende, als Durchlaufspeicherstrecke arbeitende zweite Förderstrecke (17) verteilt werden, in welcher überzählige Stapel (2) aufgenommen werden.

2. Verfahren nach Anspruch 1, dadurch gekennzeichnet, daß die Funktionen der ersten und der zweiten Förderstrecke (16 bzw. 17) als Übergabeförderstrecke und Durchlaufspeicherstrecke in Abhängigkeit von vorgegebenen Betriebszuständen miteinander vertauscht werden.

3. Verfahren nach Anspruch 1 oder 2, dadurch gekennzeichnet, daß die Verteilung der in die Übergabestation (13) zugeführten Stapel (2) auf die beiden Förderstrecken (16, 17) in Abhängigkeit von der Abgaberate (R₂) der Abgabestation (6) gesteuert wird, derart, daß eine der Abgaberate R₂ entsprechende Anzahl von Stapeln (2) je Zeiteinheit in der Übergabestation (13) an eine als Übergabeförderstrecke arbeitende Förderstrecke (16 bzw. 17) übergeben und mit einer mit der Abgaberate R₂ übereinstimmenden Förderrate R₃ zur Abgabestation (6) gefördert wird und daß eine der Differenz zwischen der Zuführrate R₁ und der Abgaberate R₂ entsprechende Anzahl überzähliger Stapel (2) an die als Durchlaufspeicherstrecke vorgesehene andere Förderstrecke (17 bzw. 16) übergeben und dort gespeichert wird.

4. Verfahren nach einem der Ansprüche 1 bis 3, dadurch gekennzeichnet, daß bei einer Unterbrechung der Stapelzufuhr zur Übergabestation (13) die in der als Durchlaufspeicher arbeitende Förderstrecke (17 bzw. 16) gespeicherten Stapel (2) mit einer der Abgaberate R₂ entsprechenden Förderrate R₃ zur Abgabestation (6) gefördert werden, daß nach der Unterbrechung wieder zugeführte Stapel bis zur Förderrate R₃ an diese Förderstrecke (17 bzw. 16) übergeben werden und daß über die Förderrate R₃ hinaus zugeführte überzählige Stapel an die andere Förderstrecke (16 bzw. 17) übergeben werden, die nun als Durchlaufspeicherstrecke genutzt wird.

5. Verfahren nach einem der Ansprüche 1 bis 4, dadurch gekennzeichnet, daß die Belegung der Ahgabeposition (24 bzw. 26) der als Durchlaufspeicherstrecke genutzten Förderstrecke (16 bzw. 17) in der Abgabestation (6) überwacht wird, daß die Funktionen der beiden Förderstrecken (16 bzw. 17) miteinander vertauscht werden, wenn die Belegung der Abgabeposition mit einem Stapel (2) festgestellt wird, so daß die in der zuvor als Durchlaufspeicherstrecke genutzten Förderstrecke gespeicherten Stapel mit einer der Abgaberate R₂ gleichen Förderrate R₃ zur Abgabestation (6) gefördert und dort zur Packmaschine (1) hin abgegegeben werden, weiter zur Übergabestation (13) zugeführte Stapel (2) entsprechend der Förderrate R₃ an die nun als Übergabeförderstrecke genutzte Förderstrecke übergeben werden und überzählige Stapel an die zuvor als Übergabeförderstrecke, nun als Durchlaufspeicherstrecke genutzte andere Förderstrecke übergeben werden.

6. Vorrichtung zum Beschicken einer Packmaschine, insbesondere einer Maschine zum Verpacken von Zigaretten oder dergleichen Produkten in Klappschachteln (Higed-Lid-Packungen), mit Stapeln aus Packmaterialzuschnitten, mit einem die Stapel einer Übergabestation (13) zuführenden Zuführförderer (11), einem Transferförderer (4) zum Transportieren der Stapel von der Übergabestation zu einer Abgabestation, einem die Stapel aus der Abgabestation zur Packmaschine hin abfördernden Abgabeförderer (6) und Übergabemitteln zum Übergeben der Stapel vom Zuführförderer auf den Transferförderer und von diesem auf den Abgabeförderer, dadurch gekennzeichnet, daß der Transferförderer (4) zweibahnig ausgebildet ist und zwei separat antreibbare Fördermittel (16, 17) aufweist und daß zum Übergeben von Stapeln (2) ein erstes Übergabemittel (32.1, 34, 36.1) zwischen dem Zuführförderer (11) und den beiden Fördermitteln (16, 17) des Transferförderers (4) und ein zweites Übergabemittel (32.2, 34, 36.2) zwischen den beiden Fördermitteln (16, 17) und dem Abgabeförderer (7) hin- und herbewegbar sind.

7. Vorrichtung nach Anspruch 6, dadurch gekennzeichnet, daß als Fördermittel (16, 17) des Transferfördermittels (4) separat angetriebene Band- oder Kettenförderer vorgesehen sind, deren Fördertrume im wesentlichen horizontal verlaufen.

8. Vorrichtung nach Anspruch 6 oder 7, dadurch gekennzeichnet, daß die Fördermittel (16, 17) des Transferförderers (4) vor und zurück antreibbar sind.

9. Vorrichtung nach einem der Ansprüche 6 bis 8, dadurch gekennzeichnet, daß die Fördermittel (16, 17) des Transferförderers (4) im wesentlichen parallel zueinander verlaufen, daß zwischen Aufgabepositionen (22, 23) dar Fördermittel (16, 17) in der ersten Übergabestation (13) eine Abgabeposition (14) des Zuführförderers (11) liegt und daß die Aufgabeposition (28) des Abgabeförderers (7) zwischen den Abnahmepositionen (24, 26) der Fördermittel (16, 17) in der zweiten Übergabestation (27) angeordnet ist.

10. Vorrichtung nach einem der Ansprüche 6 bis 9, dadurch gekennzeichnet, daß in den Übergabestationen (13, 27) als Übergabemittel Querförderer (32.1 und 32.2) vorgesehen sind.

11. Vorrichtung nach Anspruch 10, dadurch gekennzeichnet, daß die Querförderer (32.1, 32.2) als Zangenwagen (34) ausgebildet sind, die an die Fördermittel (16, 17) des Transferförderers (4) und den Zuführförderer (11) bzw. den Abgabeförderer (7) überspannenden Querführungen (33.1, 33.2) verfahrbar sind, und daß jeder Zangenwagen (34) eine quer zu seiner Bewegungsrichtung auf einen Stapel zu und zurück bewegbare Greifzange (36.1, 36.2) zum Erfassen eines Stapels (2) aufweist.

12. Vorrichtung nach einem der Ansprüche 6 bis 11, dadurch gekennzeichnet, daß den Aufgabe- und Abnahmepositionen (22, 23 bzw. 24, 26) der Fördermittel (16, 17) des Transferförderers (4) Sensormittel (57, 61 bzw. 62, 63) zum Erfassen ihrer Belegung mit Stapeln (2) zugeordnet sind.

13. Vorrichtung nach einem der Ansprüche 6 bis 12, dadurch gekennzeichnet, daß eine Steueranordnung (46) zum Steuern der Bewegung des Übergabemittels (32.1) der ersten Übergabestation (13) vorgesehen ist, derart, daß auf dem Zuführförderer (11) nacheinander in der Übergabestation (13) eintreffende Stapel (2) in Abhängigkeit von vorgegebenen Betriebszuständen auf die beiden Fördermittel (16, 17) des Transferförderers (4) verteilt werden.

14. Vorrichtung nach einem der Ansprüche 6 bis 13, dadurch gekennzeichnet, daß eines der Fördermittel (16 bzw. 17) des Transferförderers (4) als Übergabeförderer vorgesehen ist, der nach der Übergabe eines Stapels (2) in seine Aufgabeposition (22 bzw. 23) solange antreibbar ist, bis ein Stapel (2) seine Abnahmeposition (24 bzw. 26) erreicht hat, und daß das andere Fördermittel (17 bzw. 16) als Durchlaufspeicher vorgesehen ist, der nach der Übergabe eines Stapels (2) in seine Aufgabeposition (23 bzw. 22) um im wesentlichen eine Stapelposition weiterbewegbar ist.

15. Vorrichtung nach Anspruch 14, dadurch gekennzeichnet, daß das zunächst als Durchlaufspeicher vorgesehene Fördermittel (17 bzw. 16) als Übergabeförderer betreibbar ist, sobald seine Abnahmeposition (26 bzw. 24) in der Abgabestation (6) mit einem Stapel (2) besetzt ist, und daß gleichzeitig das zuvor als Übergabeförderer betriebene Fördermittel (16 bzw. 17) nun als Durchlaufspeicher betreibbar ist.

## Claims

1. Method for supplying a packing machine, in particular a machine for packing cigarettes or suchlike products in hinged-lid packets, with stacks of packing-material blanks, in which the stacks are brought to a transfer station, are conveyed from the transfer station along a transfer section to a discharge station and are discharged from the discharge station towards the packing machine, characterized in that the stacks (2) are fed to the transfer station (13) at a feed rate R₁ (stacks per unit of time) which at least from time to time exceeds the discharge rate R₂ (stacks per unit of time) at which they are discharged from the discharge station (6) towards the packing machine (1), and in that the stacks are distributed from the transfer station (13) to a first conveying section (16) provided as a transfer conveying section, along which they are conveyed to the discharge station (6) at a conveying rate R₃ (stacks per unit of time) corresponding to the discharge rate, and at least one second conveying section (17) which connects the transfer station to the discharge station and operates as a transit storage section and in which surplus stacks (2) are held.

2. Method according to Claim 1, characterized in that the functions of the first and the second conveying section (16 and 17 respectively) as a transfer conveying section and a transit storage section are reversed in dependence on preset operating states.

3. Method according to Claim 1 or 2, characterized in that the distribution of the stacks (2), fed into the transfer station (13), to the two conveying sections (16, 17) is controlled in dependence on the discharge rate (R₂) of the discharge station (6), so that a number of stacks (2) per unit of time in the transfer station (13) corresponding to the discharge rate R₂ are transferred to a conveying section (16 or 17) operating as a transfer conveying section and conveyed to the discharge station (6) at a conveying rate R₃ corresponding to the discharge rate R₂, and in that a number of surplus stacks (2) corresponding to the difference between the feed rate R₁ and the discharge rate R₂ are transferred to the other conveying section (17 or 16) provided as a transit storage section and stored there.

4. Method according to one of Claims 1 to 3, characterized in that, in the event of an interruption of the stack feeding to the transfer station (13), the stacks (2) stored in the conveying section (17 or 16) operating as a transit store are conveyed to the discharge station (6) at a conveying rate R₃ corresponding to the discharge rate R₂, in that stacks fed again after the interruption are transferred to this conveying section (17 or 16) at a rate reaching the conveying rate R₃, and in that surplus stacks fed at a rate exceeding the conveying rate R₃ are transferred to the other conveying section (16 or 17), which is now used as a transit storage section.

5. Method according to one of Claims 1 to 4, characterized in that the occupation of the discharge position (24 or 26) of the conveying section (16 or 17) used as a transit storage section in the discharge station (6) is monitored, in that the functions of the two conveying sections (16 or 17) are reversed when it is ascertained that the discharge position is occupied by a stack (2), so that the stacks stored in the conveying section used previously as a transit storage section are conveyed to the discharge station (6) at a conveying rate R₃ equal to the discharge rate R₂ and discharged there towards the packing machine (1), stacks (2) continuing to be fed to the transfer station (13) are transferred to the conveying section now being used as a transfer conveying section in correspondence with the conveying rate R₃, and surplus stacks are transferred to the other conveying section previously used as a transfer conveying section and now being used as a transit storage section.

6. Apparatus for supplying a packing machine, in particular a machine for packing cigarettes or suchlike products in hinged-lid packets, with stacks of packing-material blanks, having a feed conveyor (11) which feeds the stacks to a transfer station (13), a transfer conveyor (4) for transporting the stacks from the transfer station to a discharge station, a discharge conveyor (6) which discharges the stacks from the discharge station towards the packing machine, and transfer means for transferring the stacks from the feed conveyor to the transfer conveyor and from the transfer conveyor to the discharge conveyor, characterized in that the transfer conveyor (4) is constructed with two paths and has two separately drivable conveying means (16, 17), and in that for transferring stacks (2) a first transfer means (32.1, 34, 36.1) is movable to and fro between the feed conveyor (11) and the two conveying means (16, 17) of the transfer conveyor (4) and a second transfer means (32.2, 34, 36.2) is movable to and fro between the two conveying means (16, 17) and the discharge conveyor (7).

7. Apparatus according to Claim 6, characterized in that separately driven band or chain conveyors whose conveying strands run substantially horizontally are provided as the conveying means (16, 17) of the transfer conveying means (4).

8. Apparatus according to Claim 6 or 7, characterized in that the conveying means (16, 17) of the transfer conveyor (4) are drivable forwards and backwards.

9. Apparatus according to one of Claims 6 to 8, characterized in that the conveying means (16, 17) of the transfer conveyor (4) run substantially parallel to one another, in that a discharge position (14) of the feed conveyor (11) lies between two charging positions (22, 23) of the conveying means (16, 17) in the first transfer station (13), and in that the charging position (28) of the discharge conveyor (7) is arranged between the removal positions (24, 26) of the conveying means (16, 17) in the second transfer station (27).

10. Apparatus according to one of Claims 6 to 9, characterized in that transverse conveyors (32.1 and 32.2) are provided in the transfer stations (13, 27) as the transfer means.

11. Apparatus according to Claim 10, characterized in that the transverse conveyors (32.1, 32.2) are constructed as tongs-bearing carriages (34) which are traversable on transverse guides (33.1, 33.2) spanning the conveying means (16, 17) of the transfer conveyor (4) and the feed conveyor (11) and discharge conveyor (7) respectively, and in that each tongs-bearing carriage (34) has tongs (36.1, 36.2), movable towards a stack and back transversely to the direction of movement of the tongs-bearing carriage, for grasping a stack (2).

12. Apparatus according to one of Claims 6 to 11, characterized in that the charging and removal positions (22, 23 and 24, 26 respectively) of the conveying means (16, 17) of the transfer conveyor (4) are assigned sensor means (57, 61 and 62, 63 respectively) for detecting their occupation by stacks (2).

13. Apparatus according to one of Claims 6 to 12, characterized in that a control arrangement (46) for controlling the movement of the transfer means (32.1) of the first transfer station (13) is provided, so that stacks (2) arriving successively at the transfer station (13) on the feed conveyor (11) are distributed to the two conveying means (16, 17) of the transfer conveyor (4) in dependence on preset operating states.

14. Apparatus according to one of Claims 6 to 13, characterized in that one of the conveying means (16 or 17) of the transfer conveyor (4) is provided as a transfer conveyor which, after the transfer of a stack (2) into its charging position (22 or 23), can be driven until a stack (2) has reached its removal position (24 or 26), and in that the other conveying means (17 or 16) is provided as a transit store which, after the transfer of a stack (2) into its charging position (23 or 22), can be moved on by substantially one stack position.

15. Apparatus according to Claim 14, characterized in that the conveying means (17 or 16) provided initially as a transit store is operable as a transfer conveyor as soon as its removal position (26 or 24) in the discharge station (6) is occupied by a stack (2), and in that simultaneously the conveying means (16 or 17) operated previously as a transfer conveyor is now operable as a transit store.

## Revendications

1. Procédé pour charger une machine d'emballage, en particulier une machine pour emballer des cigarettes ou produits analogues dans des boites à rabat (emballages Hinged-Lid), avec des piles de flans de matériau d'emballage, selon lequel les piles sont placées dans un poste de transfert, sont à partir du poste de transfert transportées dans un poste de distribution, le long d'un parcours de transfert et sont délivrés par le poste de distribution à la machine d'emballage, caractérisé en ce que les piles (2) sont amenées au poste de transfert (13) à un débit d'amenée R₁ (nombre de piles par unité de temps) qui dépasse, au moins par moments, le débit de distribution R₂ (nombre de piles par unité de temps), auquel elles sont délivrées par le poste de distribution (6) à la machine d'emballage (1), et en ce que les piles issues du poste de transfert (13) sont réparties sur un premier parcours de transport (16), constituant un parcours de transport de transfert, le long duquel elles sont transportées au poste de distribution (6), à un débit de transport R₃ (nombre de piles par unité de temps) coïncidant avec le débit de distribution, et sur au moins un deuxième parcours de transport (17), reliant le poste de transfert au poste de distribution et agissant comme parcours accumulateur continu, dans lequel des piles (2) en surnombre sont reçues.

2. Procédé selon la revendication 1, caractérisé en ce que les fonctions du premier et du deuxième parcours de transport (16, respectivement 17), comme parcours de transport de transfert et parcours accumulateur continu, sont permutées mutuellement en fonction d'états de fonctionnement prédéterminés.

3. Procédé selon la revendication 1 ou 2, caractérisé en ce que la répartition des piles (2) amenées dans le poste de transfert (13), sur les deux parcours de transport (16, 17), est commandée en fonction du débit de distribution R₂ du poste de distribution (6), d'une manière telle qu'un nombre de piles (2), correspondant au débit de distribution R₂ soit transféré à chaque unité de temps, dans le poste de transfert (13), sur un parcours de transport (16, respectivement 17) agissant comme parcours de transport de transfert et soit transporté au poste de distribution (6), à un débit de transport R₃ coïncidant avec le débit de distribution R₂, et qu'un nombre, correspondant à la différence entre le débit d'amenée R₁ et le débit de distribution R₂, de piles (2) en surnombre est transféré sur l'autre parcours de transport (17, respectivement 16) prévu comme parcours accumulateur continu et y est accumulé.

4. Procédé selon l'une des revendications 1 à 3, caractérisé en ce qu'en cas d'interruption de l'amenée de piles au poste de transfert (13), les piles (2) accumulées dans le parcours de transport (17, respectivement 16) agissant comme accumulateur continu sont transportées à un débit de transport R₃ correspondant au débit de distribution R₂, jusqu'au poste de distribution (6), en ce qu'après l'interruption, des piles à nouveau amenées sont transférées, jusqu'à atteinte du débit de transport R₃, sur ce parcours de transport (17, respectivement 16) et en ce que des piles en surnombre, ayant été amenées au-delà du débit de transport R₃, sont transférées sur l'autre parcours de transport (16, respectivement 17), qui est utilisé à présent comme parcours accumulateur continu.

5. Procédé selon l'une des revendications 1 à 4, caractérisé en ce que l'occupation de la position de prélèvement (24, respectivement 26) du parcours de transport (16, respectivement 17) utilisé comme parcours accumulateur continu, dans le poste de distribution (6), est surveillée, en ce que les fonctions des deux parcours de transport (16, respectivement 17) sont permutées mutuellement lorsque l'occupation de la position de prélèvement par une pile (2) est constatée, de manière que les piles, accumulées dans le parcours de transport utilisé préalablement comme parcours accumulateur continu, soient transportées au poste de distribution (6), à un débit de transport R₃ identique au débit de distribution R₂, et soient délivrées là à la machine d'emballage (1), que des piles (2) ayant été amenées en outre au poste de transfert (13) soient transférées, d'une manière correspondant au débit de transport R₃, sur le parcours de transport utilisé à présent comme parcours de transport de transfert, et que les piles en surnombre soient transférées sur l'autre parcours de transport, utilisé au préalable comme parcours de transport de transfert et utilisé à présent comme parcours accumulateur continu.

6. Dispositif pour charger une machine d'emballage, en particulier une machine pour emballer des cigarettes ou produits analogues dans des boites à rabat (emballages Hinged-Lid), avec des piles de flans de matériau d'emballage, comportant un transporteur d'amenée (11) amenant les piles à un poste de transfert (13), un transporteur de transfert (4) destiné à transporter les piles du poste de transfert à un poste de distribution, un transporteur de distribution (6) qui évacue les piles du poste de distribution pour les délivrer à la machine d'emballage, et des moyens de transfert, destinés à transférer les piles du transporteur d'amenée sur le transporteur de transfert et de celui-ci sur le transporteur de distribution, caractérisé en ce que le transporteur de transfert (4) est réalisé avec deux voies et comporte deux moyens de transport (16, 17) pouvant être entraînés séparément, et en ce que, pour assurer le transfert de piles (2), sont prévus, déplaçables dans un sens et dans l'autre, un premier moyen de transfert (32.1, 34, 36.1), monté entre le transporteur d'amenée (11) et les deux moyens de transport (16, 17) du transporteur de transfert (4), et un deuxième moyen de transfert (32.2, 34, 36.2) monté entre les deux moyens de transport (16, 17) et le transporteur de distribution (7).

7. Dispositif selon la revendication 6, caractérisé en ce que sont prévus, comme moyens de transport (16, 17) du moyen transporteur de transfert (4), des transporteurs à bande ou à chaînes, entraînés séparément, dont les brins de transport s'étendent sensiblement horizontalement.

8. Dispositif selon la revendication 6 ou 7, caractérisé en ce que les moyens de transport (16, 17) du transporteur de transfert (4) sont susceptibles d'être entraînés vers l'avant et vers l'arrière.

9. Dispositif selon l'une des revendications 6 à 8, caractérisé en ce que les moyens de transport (16, 17) du transporteur de transfert (4) s'étendent sensiblement parallèlement l'un à l'autre, en ce que, entre des positions de chargement (22, 23) des moyens de transport (16, 17) dans le premier poste de transfert (13), est située une position de distribution (14) du transporteur d'amenée (11), et en ce que la positon de chargement (28) du transporteur de distribution (7) est disposée entre les positions de prélèvement (24, 26) des moyens de transport (16, 17) dans le deuxième poste de transfert (27).

10. Dispositif selon l'une des revendications 6 à 9, caractérisé en ce que des transporteurs transversaux (32.1 et 32.2) sont prévus comme moyens de transfert dans les postes de transfert (13, 27).

11. Dispositif selon la revendication 10, caractérisé en ce que les transporteurs transversaux (32.1, 32.2) sont réalisés sous forme de chariots à pinces (34), qui sont déplaçables sur des guides transversaux (33.1, 33.2) s'étendant au-dessus des moyens de transport (16, 17) du transporteur de transfert (4) et transporteur d'amenée (11), respectivement du transporteur de distribution (7), et en ce que chaque chariot à pinces (34) comporte une pince de préhension (36.1, 36.2), déplaçable vers une pile et en sens inverse, transversalement à sa direction de déplacement, pour saisir une pile (2).

12. Dispositif selon l'une des revendications 6 à 11, caractérisé en ce que des moyens formant capteur (57, 61, respectivement 62, 63) sont associés aux positions de chargement et de prélèvement (22, 23, respectivement 24, 26) des moyens de transport (16, 17) du transporteur de transfert (4), pour détecteur leur occupation par des piles (2).

13. Dispositif selon l'une des revendications 6 à 12, caractérisé en ce qu'un dispositif de commande (46) est prévu pour commander le déplacement des moyens de transfert (32.1) du premier poste de transfert (13) d'une manière telle, que des piles, arrivant les unes derrière les autres dans le poste de transfert (13) sur le transporteur d'amenée (11), soient réparties sur les deux moyens de transport (16, 17) du transporteur de transfert (4), en fonction d'états de fonctionnement prédéterminés.

14. Dispositif selon l'une des revendications 6 à 13, caractérisé en ce que l'un des moyens de transport (16, respectivement 17) du transporteur de transfert (4) est prévu comme un transporteur de transfert qui, après le transfert d'une pile (2) dans sa position de chargement (22, respectivement 23), peut être entraîné jusqu'à ce qu'une pile (2) ait atteint sa position de prélèvement (24, respectivement 26), et en ce que l'autre moyen de transport (17, respectivement 16) est prévu comme un accumulateur continu qui, après le transfert d'une pile (2) dans sa position de chargement (23, respectivement 22), peut continuer à être déplacé sensiblement d'une position de pile.

15. Dispositif selon la revendication 14, caractérisé en ce que le moyen de transport (17, respectivement 16), qui est d'abord prévu comme accumulateur continu, peut être exploité comme transporteur de transfert, dès que sa position de prélèvement (26, respectivement 24) dans le poste de distribution (6) est occupée par une pile (2), et en ce que, simultanément, le moyen de transport (16, respectivement 17), exploité préalablement comme transporteur de transfert, peut être exploité à présent comme accumulateur continu.
